# EUROPEAN PATENT SPECIFICATION

(11) **EP 4 619 213 B1**
(45) Date of publication and mention of the grant of the patent: **24.06.2026**
(21) Application number: 23837759.2
(22) Date of filing: 27.12.2023
(51) Int. Cl.: B29C 45/06, B29C 45/26, B29C 45/42, B29C 45/32, B29C 45/76, B29C 45/17, B29D 11/00, B29C 45/13, B29C 45/00, B29C 33/40, B29C 33/38, B29L 11/00

(54) **METHOD AND APPARATUS RELATING TO INJECTION MOLDING CONTACT LENS MOLD HALVES**
VERFAHREN UND VORRICHTUNG ZUM SPRITZGIESSEN VON KONTAKTLINSEN-FORMHÄLFTEN
PROCÉDÉ ET APPAREIL RELATIFS AU MOULAGE PAR INJECTION DE DEMI-MOULES DE LENTILLE DE CONTACT

(30) Priority: 29.12.2022 US 202263435909 P
(43) Date of publication of application: 24.09.2025
(73) Proprietor: CooperVision International Limited, Fareham PO15 5RL (GB)
(72) Inventor: GIBSON, John Robert, Eastleigh Hampshire SO53 4LY (GB)
(74) Representative: Abel & Imray LLP
(86) International application number: PCT/GB2023/053376
(87) International publication number: WO 2024/141755

(56) References cited:
- EP-A1- 1 136 222
- US-A1- 2016 176 092
- US-A1- 2018 056 558

## Description

### FIELD

The present disclosure relates to the field of contact lens manufacture, using mold halves produced by injection molding. In particular, it relates to apparatus and methods for injection molding two types of mold half using a single machine.

### BACKGROUND

Various methods of manufacturing contact lenses are known, including spin casting, lathing (for example, by diamond turning) and cast molding (for example, using injection molded mold halves). In particular, cast molding of contact lenses involves injection molding each of a pair of mold halves (e.g., a male mold half and a female mold half), placing a volume of a contact lens formulation on an optical quality surface of one of the two mold halves, and placing the two mold halves in contact with each other to form a contact lens mold assembly that has a contact lens-shaped cavity containing the contact lens formulation. The contact lens mold assembly is then exposed to conditions to cause the contact lens formulation to polymerize or cure in the contact lens mold assembly. Using high speed manufacturing lines, contact lenses can be manufactured in very large numbers, for example, tens of thousands each day.

US2016176092 discloses methods and apparatus for exchanging tools and/or tool assemblies used to form different types of molds for in injection-molding machines. The exchange of tools and/or tool assemblies is made using a robot. Contact lens mold halves and assemblies for molding contact lenses of different powers or types can be made with a single injection-molding apparatus.

EP1136222 discloses a method which includes injection-molding a first resin mold using a first die and a second die defining a mold cavity therebetween, and injection-molding a second resin mold using a third die and a fourth die defining a mold cavity therebetween. The first resin mold is held on one of the first and second dies and the second resin mold is held on one of the third and fourth dies. The die which holds the first resin mold and the die which holds the second resin mold are moved to assemble the first and second resin molds so as to define therebetween a mold cavity for the contact lens material, the mold cavity being filled with the molding material so that the intended contact lens material is molded.

When contact lenses are formed by cast molding using injection molded contact lens mold halves, the process includes many steps. For example, the process of producing mold halves can include closing two tool halves provided in plates of an injection molding machine and thereby forming tool cavities, injecting molten plastic into the tool cavities to form the contact lens mold halves therein, separating the tool halves to open the tool cavities containing the injection molded mold halves, removing the mold halves from the opened tool cavities and optionally transferring the newly formed mold halves to a transporter for further processing. As understood by persons skilled in the art, and as used herein, injection molding tool halves refers to the (usually metallic) inserts used to form curved surfaces of the contact lens mold halves. The inserts are typically provided in plates of an injection molding machine. One or both of the inserts, or tool halves, will have an optical quality surface used to form a lens-forming surface of a contact lens mold half.

Conventionally, each shape of mold half (e.g., male or female) is produced by an individual machine. Accordingly, producing contact lenses of a particular prescription requires the use of two injection molding machines, one to form the male mold halves and one to form the female mold halves. The cost of tooling, and the floor space occupied by that tooling, for a particular contact lens prescription is therefore relatively high.

It would hypothetically be possible to produce two types of mold half (e.g., a male mold half and a female mold half for contact lenses of a particular prescription) in a single machine by providing the machine with two subsets of tool cavities, one subset being shaped to produce male mold halves and the other subset being shaped to produce female mold halves. However, the different mold halves may have different optimum process parameters for the respective injection molding processes by which they are produced. Accordingly, forming both types of mold halves using a single machine would require one or both types of mold halves to be produced using non-optimal process parameters - the machine can be run using the optimum process parameters for one type of mold half at the expense of the other, or the machine can be run using process parameters which represent a compromise between the optimum values for each type of mold half. Producing mold halves using non-optimal process parameters can result in lower performance of those mold halves, for instance warping of the mold halves and/or poor crystalline structure.

It is an object of the invention to mitigate or obviate one of the aforesaid disadvantages, and/or to provide an improved or alternative contact lens mold half injection molding machine, method of injection molding contact lens mold halves, mold half for manufacturing a contact lens, method of manufacturing a contact lens, or contact lens.

### SUMMARY

According to a first aspect of the present disclosure there is provided a contact lens mold half injection molding machine, the machine comprising: a plurality of tool cavities, each tool cavity defining a space into which molten polymer can be injected so as to form a contact lens mold half; an injection unit in communication with the tool cavities, the injection unit being configured to melt a polymer and inject it into the tool cavities; and a controller, wherein: the plurality of tool cavities comprises a first subset of tool cavities and a second subset of tool cavities; and the machine is configurable to injection mold contact lens mold halves, by injecting molten polymer into the tool cavities and allowing the polymer to solidify, with one or more process parameters differing in value between the first subset of tool cavities and the second subset of tool cavities.

According to a second aspect of the present disclosure there is provided a method of injection molding contact lens mold halves, the method comprising: providing a first subset of tool cavities and a second subset of tool cavities; and under control of a controller, injection molding contact lens mold halves by injecting molten polymer into the first subset of tool cavities and the second subsets of tool cavities and allowing the molten polymer to solidify, wherein during injection molding of the contact lens mold halves, at least one process parameter differs in value between the first and second subsets of tool cavities.

According to a third aspect of the present disclosure there is provided a contact lens mold half for manufacturing a contact lens, the contact lens mold half being injection molded using the machine of the first aspect of the disclosure and/or the method of the second aspect of the disclosure.

According to a fourth aspect of the present disclosure there is provided a method of manufacturing a contact lens, the method comprising: injection molding a male contact lens mold half and injection molding a female contact lens mold half, at least one of said contact lens mold halves being a contact lens mold half according to the third aspect of the disclosure; engaging the male contact lens half and the female contact lens mold half with one another, with a quantity of contact lens formulation located in a cavity defined therebetween; curing the contact lens formulation to form said contact lens; and separating the male contact lens mold half and the female contact lens mold half and removing the contact lens.

According to a fifth aspect of the present disclosure there is provided a contact lens manufactured using the method of the fourth aspect of the disclosure.

### BRIEF DESCRIPTION OF THE DRAWINGS

FIGS. 1A and 1B are a perspective and cross-sectional views of two mold halves for use in the production of a contact lens.
FIGS. 2A and 2B are perspective and cross-sectional views of the two mold halves of FIGS. 1A and 1B engaging one another to define a cavity therebetween.
FIG. 3 is a cross-sectional view through a pair of tool halves used to produce the male mold half of FIGS. 1A to 2B.
FIG. 4 is a cross-sectional view through a pair of tool halves used to produce the female mold half of FIGS. 1A to 2B.
FIG. 5 is a perspective view of a machine for injection molding the mold halves of FIGS. 1A to 2B, using the pairs of tool halves shown in FIGS. 3 and 4.
FIG. 6 is a perspective view of the machine of FIG. 5, with a divider removed.
FIG. 7 is a cross-sectional view of first and second supports of the machine of FIGS. 5 and 6.
FIG. 8 is a schematic of the machine of FIGS. 5 to 7.

### DETAILED DESCRIPTION

According to a first aspect of the present disclosure there is provided a contact lens mold half injection molding machine, the machine comprising:
a plurality of tool cavities, each tool cavity defining a space into which molten polymer or molten plastic can be injected so as to form a contact lens mold half;
an injection unit in communication with the tool cavities, the injection unit being configured to melt a polymer or plastic and inject it into the tool cavities; and
a controller,
wherein:
the plurality of tool cavities comprises a first subset of tool cavities and a second subset of tool cavities; and
the machine is configurable to injection mold contact lens mold halves, by injecting molten polymer or molten plastic into the tool cavities and allowing the polymer or plastic to solidify, with one or more process parameters differing in value between the first subset of tool cavities and the second subset of tool cavities.

The machine being configurable to injection mold contact lens mold halves with one or more process parameters differing in value between the first and second subsets can allow the process parameters for each subset to be better optimized. In contrast, in a machine not configurable in this way a single set of process parameters must be used for all tool cavities. This would either require each type of mold half to be produced separately (either in different machines each requiring floor space, or at different times with associated complexities in downstream processing), or for a machine to injection mold contact lens mold halves using two subsets of two cavities but with the same (not necessarily optimal) process parameters being applied to both subsets.

Each subset may comprise one tool cavity or more than one tool cavity. The subsets may each have the same number of tool cavities, or may have different numbers of tool cavities to one another.

Where the subsets each comprise more than one tool cavity, the tool cavities of the first subset may be substantially the same as one another, and the tool cavities of the second subset may be substantially the same as one another. Alternatively, one or both subsets may comprise two or more tool cavities which differ from one another in size and/or shape.

The machine may be configurable to inject molten polymer or plastic into the first and second subsets at the same time, or at different times (which may or may not overlap with one another).

The controller may be a single master controller, or a plurality of sub-controllers controlling different aspects of the machine.

As discussed below, the one or more process parameters which differ in value may include, for example, one or more of: the material composition of the polymer or plastic injected, an aspect of the hold pressure profile such as hold time or peak hold pressure, back pressure of polymer/plastic feed, temperature applied by a heater, tool cavity temperature or rate of cooling, and temperature of molten polymer/plastic when injected.

The injection unit may comprise a first barrel from which molten polymer or molten plastic can be injected into the first subset of tool cavities, and a second barrel from which molten polymer or molten plastic can be injected into the second subset of tool cavities.

The first and second subsets having different barrels may allow different polymers/plastics (either different formulations of the same polymer/plastic, or different polymers/plastics altogether) to be injected into the first and second subsets, thereby allowing the machine to simultaneously produce tool halves made from two different polymers/plastics.

The first and second barrels may have respective first and second hoppers arranged to feed polymer or plastic pellets into them.

The first and second barrels may be substantially the same as one another. Alternatively, they may have different shapes and/or sizes to one another. For example, one of the barrels may have a different aspect ratio, a different width or diameter, and/or a different length to the other.

In remote technical fields such as power tool manufacture it is known to provide injection molding machines with two separate barrels in order to perform "2K molding" in which elastomeric polymer is overmolded on top of a rigid polymer part of a housing, for the purposes of providing vibration-damping mountings or comfortable and grippy areas of a handle. However, contact lens mold half manufacture has no need for such overmolding, and therefore such machines have not been considered for use in this field.

In the case of 2K molding at least one of the tool cavities must be arranged to contain two different polymers, for instance a rigid polymer previously injection molded and an elastomeric polymer being overmolded on top. In other words, methods of 2K molding require a step of injecting a second polymer into a tool cavity which already contains a first polymer. In contrast, in the present case each tool cavity may be configured to receive only a single polymer/plastic at any one time. Thus, a step of injecting a second polymer/plastic into a tool cavity containing a first polymer/plastic may be absent. In other words, methods disclosed herein may comprise injecting each tool cavity with a single polymer/plastic, such that each tool cavity only ever contains a single polymer/plastic.

The first barrel may have a first plunger and the second barrel may have a second plunger, the first plunger and the second plunger being operable independently by the controller to move longitudinally and thereby eject molten polymer or molten plastic out of an outlet of the associated barrel.

The first and second subsets of tool cavities having independently operable plungers can allow a number of different process parameters to differ between the two subsets of tool cavities as discussed in more detail below.

The controller may be configurable to operate the first plunger so as to produce a first hold pressure profile in the first tool cavities, and to operate the second plunger so as to produce a second hold pressure profile in the second tool cavities, the first and second hold pressure profiles being different to one another.

A peak hold pressure of the first hold pressure profile may be different to a peak hold pressure of the second hold pressure profile.

The controller may be configurable to operate the plungers to produce a peak hold pressure of one of the hold pressure profiles which is at least 5%, at least 10%, at least 25% or at least 50% larger than the peak hold pressure of the other hold pressure profile.

The peak hold pressure of a hold pressure profile may be considered to be the maximum pressure value of that hold pressure profile.

A hold time of the first hold pressure profile may be different to a hold time of the second hold pressure profile.

The controller may be configurable to operate the plungers to produce a hold time of one of the hold pressure profiles which is at least 5%, at least 10%, at least 25% or at least 50% longer than the hold time of the other hold pressure profile.

Optionally:
the first plunger has a first screw and the second plunger has a second screw, each plunger being operable by the controller to rotate and thereby cause the associated screw to urge polymer or plastic towards the outlet of the associated barrel; and
the controller is configurable to operate the first and second plungers differently to one another such that the first screw urges said polymer or plastic at a different back pressure to the second screw.

By operating the screws to exert different back pressures, the controller can apply different shear pressures (and thus different levels of heating from deformation) to polymer or plastic pellets in the two feed screws. The controller may be configurable to operate the feed screws to produce different back pressures by applying different levels of axial pressure to the screws.

The first barrel may have a first heater and the second barrel may have a second heater, the first heater and the second heater being arranged to heat plastic or polymer contained in the associated barrel, the first heater and the second heater being controlled by the controller and the controller being configurable to operate the first heater and the second heater at different temperatures to one another.

This can allow polymer/plastic in the first and second barrels to be heated at different rates and/or to different peak temperatures.

The first subset of tool cavities may be associated with a first coolant path and the second subset of tool cavities may be associated with a second coolant path which is separate to the first.

The first and second subsets of tool cavities having separate coolant paths can allow the tool cavities of the two subsets to be cooled at different rates and/or be cooled to or held at different temperatures, for instance by running coolant through the two coolant paths at different temperatures and/or different flow rates.

Reference herein to the coolant paths being separate is not intended to mean that the two coolant paths must be spaced apart from one another by any particular physical distance. In some arrangements the first and second coolant paths may run in close proximity to one another for at least some of their respective lengths.

One or both of the coolant paths may have a temperature adjustment device such as a heater and/or cooler.

The tool cavities of the first subset may be different shapes and/or different sizes to the tool cavities of the second subset. For example, the first subset of tool cavities may be shaped to form male contact lens mold halves, and the second subset of tool cavities may be shaped to form female contact lens mold halves.

This may allow the machine to simultaneously produce both mold halves needed to manufacture a particular shape (e.g., a particular prescription) of contact lens. This, in turn, may simplify downstream handling of the mold halves in a contact lens production line, reducing the extent to which the male and female mold halves needed to produce a particular contact lens may become separated from one another and/or mixed in with mold halves for a different contact lens.

According to a second aspect of the present disclosure there is provided a method of injection molding contact lens mold halves, the method comprising:
providing a first subset of tool cavities and a second subset of tool cavities; and
under control of a controller, injection molding contact lens mold halves by injecting molten polymer or molten plastic into the first subset of tool cavities and the second subset of tool cavities and allowing the molten polymer or molten plastic to solidify,
wherein during injection molding of the contact lens mold halves, at least one process parameter differs in value between the first subset of tool cavities and the second subset of tool cavities.

At least one process parameter different in value between the first and second subsets can allow the process parameters for each subset to be better optimized for that subset, rather than requiring a single set of process parameters to be used across all tool cavities in a machine not configurable in this way a single set of process parameters must be used for all tool cavities.

For the avoidance of doubt, reference to a process parameter differing in value "during injection molding of the contact lens mold halves" is intended to refer to any point during the injection molding process, not necessarily the step of injecting molten polymer/plastic.

The polymer or plastic injected into the first subset of tool cavities may differ in material composition to the polymer or plastic injected into the second subset of tool cavities.

A first hold pressure profile applied to polymer or plastic in the first subset of tool cavities may be different to a second hold pressure profile applied to polymer in the second subset of tool cavities.

A peak hold pressure of the first hold pressure profile may be different to a peak hold pressure of the second hold pressure profile.

A hold time of the first hold pressure profile may be different to a hold time of the second hold pressure profile.

The polymer or plastic may be injected into the first subset of tool cavities at a different temperature to the polymer or plastic injected into the second subset of tool cavities.

The first subset of tool cavities may be held at a different temperature to the second subset of tool cavities during injection molding of the contact lens mold halves.

The first and second subsets may be held at different temperatures before, during and/or after injection of the molten polymer/plastic.

Molten polymer or plastic may be injected into the first and second subsets of tool cavities at the same time, or at different times (which may or may not overlap with one another).

According to a third aspect of the present disclosure there is provided a contact lens mold half for manufacturing a contact lens, the contact lens mold half being injection molded using the machine of the first aspect of the disclosure and/or the method of the second aspect of the disclosure.

Being produced by a method/machine in which one or more of the process parameters can be tailored towards the optimum process parameters for that specific subset of tool cavities, the mold half may be have advantageously precise tolerances (for instance dimensional tolerances or crystal structure requirements).

According to a fourth aspect of the present disclosure there is provided a method of manufacturing a contact lens, the method comprising:
injection molding a male contact lens mold half and injection molding a female contact lens mold half, at least one of said mold halves being a contact lens mold half according to the third aspect of the disclosure;
engaging the male contact lens mold half and the female contact lens mold half with one another, with a quantity of contact lens formulation located in a cavity defined therebetween;
curing the contact lens formulation to form said contact lens; and
separating the male contact lens mold half and the female contact lens mold half and removing the contact lens.

By using at least one a mold half which may have advantageously precise tolerances as described above, the method may produce contact lenses with correspondingly precise tolerances.

According to a fifth aspect of the present disclosure there is provided a contact lens manufactured using the method of the fourth aspect of the disclosure.

Such a contact lens may have advantageously precise tolerances (and thus optical performance) for the reasons discussed above.

Herein, reference is made to mold halves, but it is to be understood that, although two mold halves may complement each other and together form a mold assembly, each mold half is not necessarily half of, or 50% of, the mold assembly. One mold half can comprise 20%, 30%, 40%, 45%, or the like, of a mold assembly while the other mold half can comprise 80%, 70%, 60%, 55%, or the like, of the mold assembly. Accordingly, while the two mold halves can make one whole mold assembly, it is to be understood that the two mold halves neither have to be of the same size nor do they have to be mirror images of one another. Similarly, while reference is made herein to tool halves, it is to be understood that two tool halves, that complement each other and together define a tool cavity, do not have to be of the same size or mirror images of one another.

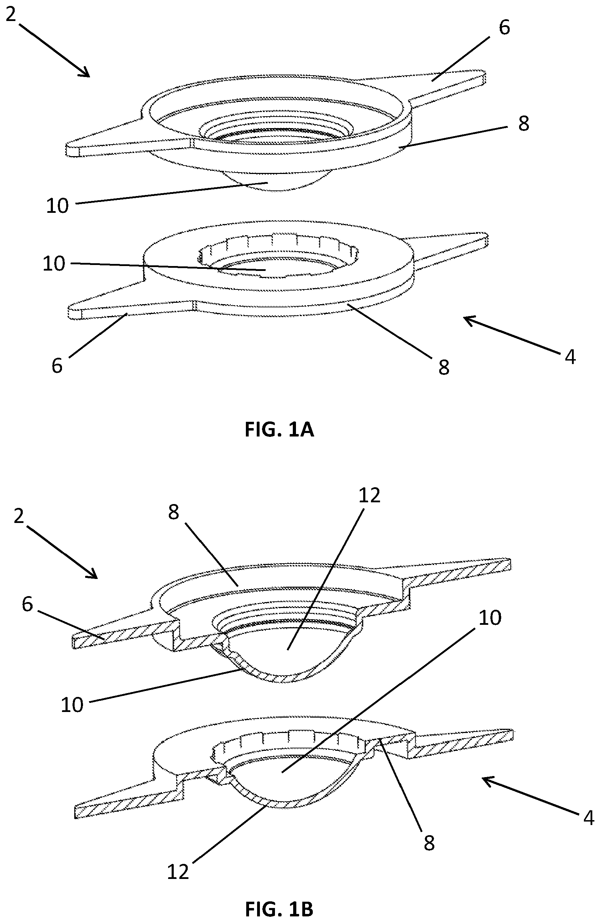

With reference to the drawings, in which like reference numerals denote corresponding features, FIGS. 1A and 1B show a male mold half 2 and a female mold half 4 for use in the manufacture of a contact lens. Each mold half 2, 4 has alignment tabs 6, a rim portion 8, an optical surface 10 and a non-optical surface 12. The optical surface 10 of the male mold half 2 is convex and its non-optical surface 12 is concave, whereas the optical surface 10 of the female mold half 4 is concave and its non-optical surface 12 is convex.

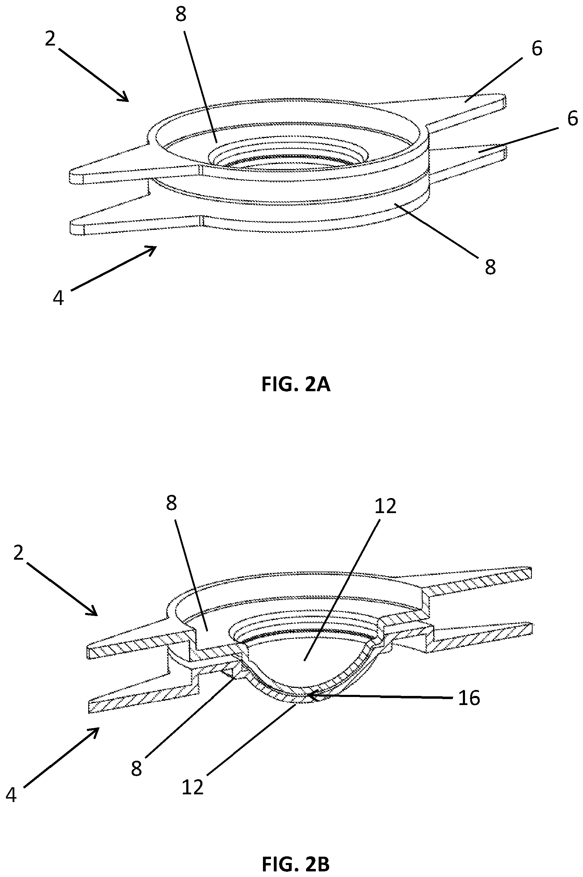

The male and female mold halves 2, 4 can engage with one another as shown in FIGS. 2A and 2B. With the mold halves 2, 4 so engaged, they seal against one another and the convex optical surface 10 of the male mold half 2 projects into the concave optical surface 10 of the female mold half 4. The two optical surfaces 10 thereby form a cavity 16 within which a contact lens can be molded.

To manufacture a contact lens using the mold halves 2, 4 a quantity of contact lens formulation is placed into or onto the concave optical surface 10 of the female mold half 4, and the male and female mold halves 2, 4 are then engaged with one another. As the mold halves 2, 4 are engaged, the contact lens formulation is spread out and substantially fills the cavity 16. The mold halves 2, 4 containing the contact lens formulation are then treated, for instance using heat or UV light, to cure the contact lens formulation into a polymer contact lens. The mold halves 2, 4 can then be separated to release the contact lens, which is then washed to remove any residual chemicals that do not form part of the polymerized contact lens, such as unreacted monomer and the like. The lens is then hydrated, and packaged ready for use.

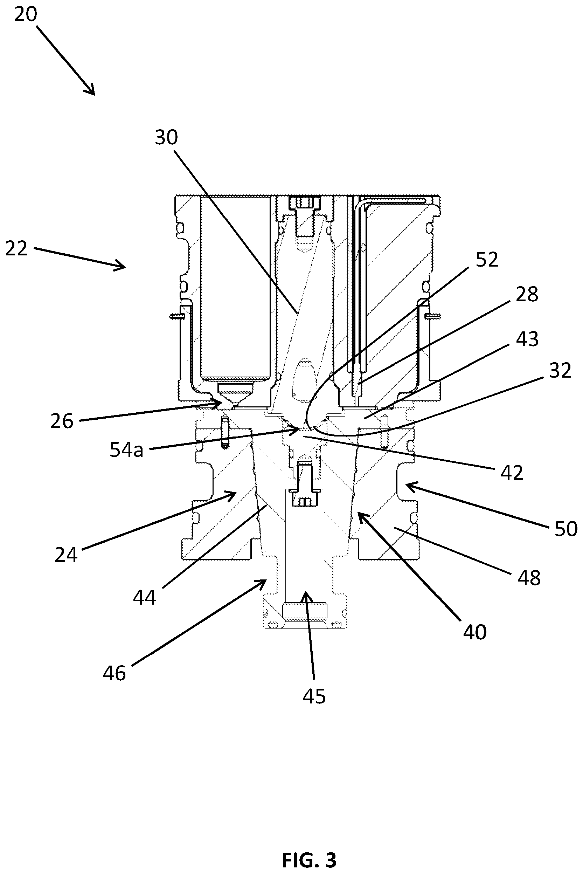

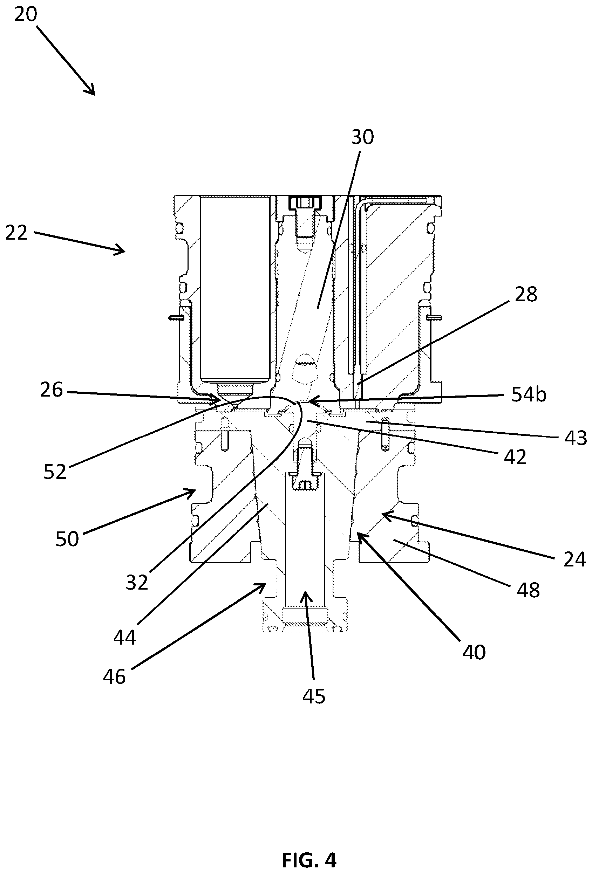

The mold halves 2, 4 are each produced by injection molding into a tool cavity formed between a pair of tool halves. FIG. 3 shows the pair 20 of tool halves used to produce the male mold half 2, and FIG. 4 shows the pair 20 of tool halves used to produce the female mold half 4. FIGS. 3 and 4 will now be referred to in combination with FIGS 1A, 1B, 2A and 2B.

Each pair 20 of tool halves comprises a first tool half 22 and a second tool half 24. Each first tool half 22 includes an injection nozzle 26, a thermocouple 28, a tool portion 30, and an ejection mechanism (not visible) arranged to eject formed mold halves. Coolant flow passages (not visible) are provided behind tool portion 30, passing approximately 4 mm from its outermost surface 32 at their closest approach. The injection nozzles 26 and thermocouples 28 of the first tool halves 22 are located away from the centers of tool portions 30. This makes room for the coolant passages to pass close to the outer surface 32 of the tool portion 30, where the surface of the contact lens mold half used to cast-mold the optic zone of a contact lens is formed.

Each second tool half 24 of this example takes the form of a collet 40 carrying a tool insert 42. Each collet 40 has a front disc portion 43 and a frustoconical body portion 44. Frustoconical body portion 44 has a coolant passage 45 down its center, up to the rear of the tool insert 42 and back, and includes toward its rear an annular groove 46. In this example each second tool half 24 is supportable in a respective bushing 48 of a second support. The bushings 48 in this example also have coolant passages 50 running around them.

The first tool halves 22 can be clamped in place in the bushings 48, and thus attached to the aforementioned second support (not shown), by respective clamps (not shown) which engage the grooves 46 of the collets 40 to prevent withdrawal of the frustoconical body portions 44 from the bushings 48. Each second tool half 24 can be unclamped, removed, and replaced independently of other second tool halves, enabling flexible interchange of second tool halves 24. Furthermore, each collet 40 can carry a different tool insert 42.

The second tool half 24 of each pair 20 provides an optical surface 52. In the case of the second tool half 24 of FIG. 3, the optical surface 52 of the second tool half is concave and defines the convex optical surface 10 of the male mold half 2. In the case of the second tool half 24 of FIG. 4, the optical surface 52 of the second tool half is convex and defines the concave optical surface 10 of the female mold half 4. In each case, in this example the optical surfaces 52 of the second tool halves 24 are provided on the tool inserts 42. The shapes of the optical surfaces 52 of the second tool halves 24, and thus the shapes of the optical surfaces 10 of the mold halves 2, 4 (and therefore the shape and optical properties of a contact lens produced therewith) can therefore be changed by changing the tool inserts 42 of the second tool halves 24.

In the first tool half 22 of each pair 20, the outermost surface 32 of the tool portion 30 provides a surface of complementary shape to the optical surface 52 of the associated second tool half 24. Thus, the outermost surface 32 of the tool portion 30 of the first tool half 22 in FIG. 3 is convex, and the outermost surface 32 of the tool portion 30 of the first tool half 22 in FIG. 4 is concave. Since these surfaces do not form surfaces of the mold halves 2, 4 which form surfaces of the contact lens, their precise shapes are less crucial. Accordingly, the same first tool half 22 may be used with a plurality of different second tool halves (e.g. with a plurality of different tool inserts 42 fitted to the same collets 40, and/or with a plurality of different sets of collets 40 each with different tool inserts 42).

FIGS. 3 and 4 show the pairs 20 of tool halves 22, 24 engaged with one another. So engaged, the first and second tool halves 22, 24 form tool cavities 54a, 54b into which molten polymer or molten plastic can be injected (through the injection nozzles 26) and allowed to cool to form the respective mold halves 2, 4.

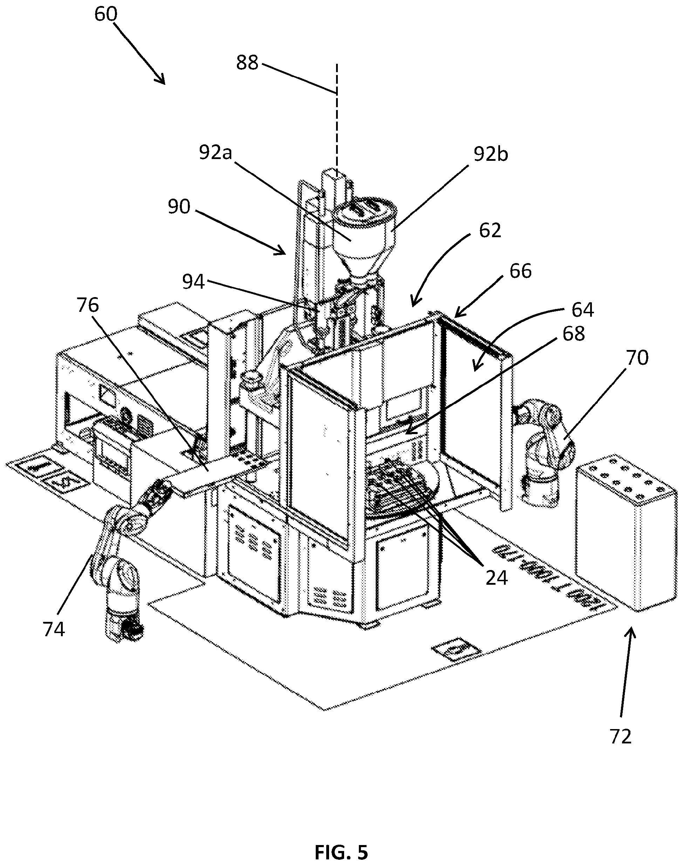

FIG. 5 shows an example of a contact lens mold half injection molding machine 60 which utilizes first and second tool halves as described above. The machine 60 includes an injection molding area 62 and a tool change area 64, separated from one another by a divider 66 which includes a sliding door 68. The apparatus 60 also includes a tool exchange robot 70, a tool store 72, and a take-off robot 74 with plate 76. Further, the apparatus comprises a first support 80 and a second support 82.

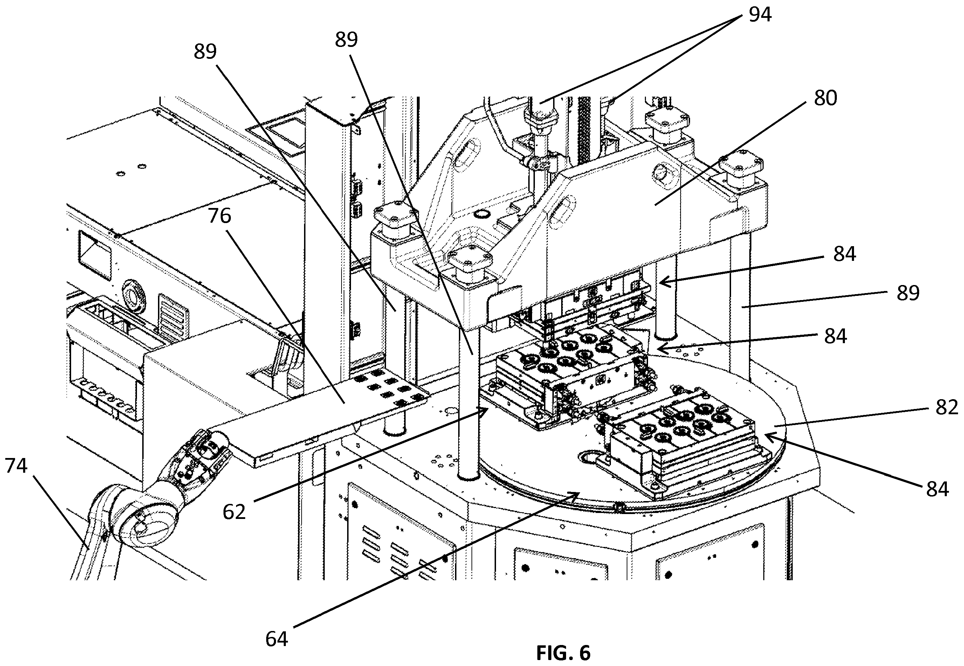

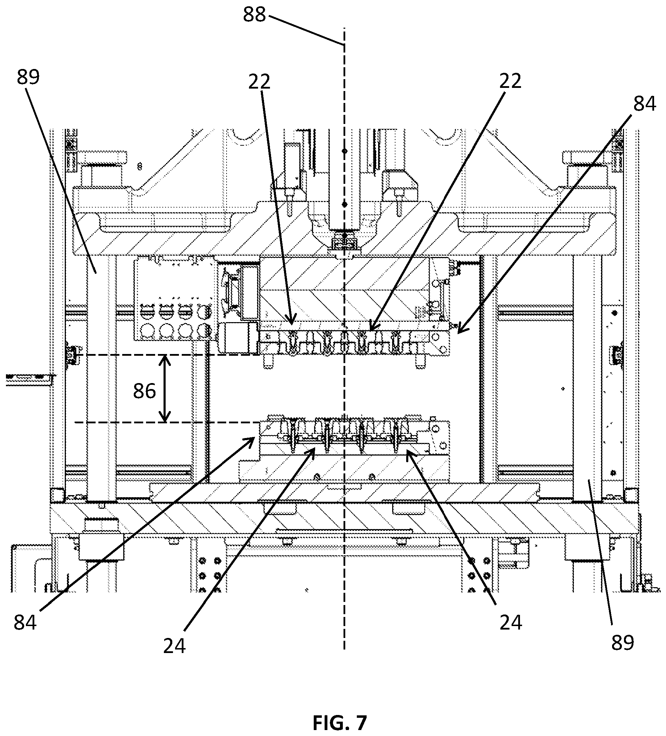

FIG. 6 shows the apparatus 60 with the divider 66 removed, showing the first and second supports 80, 82 more clearly, and FIG. 7 shows these components in cross-section. The machine 60 will now be described with reference to FIGS. 5 to 7 in combination with FIGS 1A to 4.

Mounted to a mounting plate assembly 84 of the first support 80, towards the left from the perspective of FIGS. 6 and 7, are a set of four first tool halves 22 of the type shown in FIG. 3 (i.e. first tool halves 22 for producing male mold halves 2). Mounted to a mounting plate assembly 84 of the second support 82, aligned with that set of first tool halves 22, are a set of four second tool halves 24 of the type shown in FIG. 3 (i.e. second tool halves 24 for producing female mold halves 4).

Mounted to the mounting plate assembly 84 of the first support 80, towards the right from the perspective of FIGS. 6 and 7, are a set of four first tool halves 22 of the type shown in FIG. 4 (i.e. first tool halves 22 for producing female mold halves 4). Mounted to the mounting plate assembly 84 of the second support 82, aligned with that set of first tool halves 22, are a set of four second tool halves 24 of the type shown in FIGS. 4 (i.e. second tool halves 24 for producing male mold halves 2).

The first and second supports 80, 82 are movable relative to one another between an open position (as shown in FIGS. 5 to 7) and a closed position. With the supports 80, 82 in the open position the first and second tool halves 22, 24 are aligned with one another across a part removal gap 86. With the supports 80, 82 in the closed position, the aligned first and second tool halves 22, 24 engage one another in the manner shown in FIGS. 3 and 4. The mold halves 22, 24 towards the left of the supports 80, 82 (from the perspective of FIGS. 6 and 7) form a first subset of tool cavities 54a for forming male mold halves. The mold halves 22, 24 towards the right of the supports 80, 82 (from the perspective of FIGS. 6 and 7) form a second subset of tool cavities 54a for forming female mold halves.

In this example, the supports 80, 82 are movable between the open and closed positions by moving the first support 80 along a vertically-aligned molding axis 88, guided by a set of guide rods 89 which run parallel to the molding axis 88. The first support is mounted to a stationary feed unit 90, which also supports hoppers 92a, 92b holding polymer/plastic granules to be injection molded, by a pair of hydraulic cylinders 94 of a drive mechanism of the apparatus. To move the first support 80 to the closed position the cylinders 94 are extended to lower the first support 80 down along the molding axis 88 towards the second support 82, and to move the first support 80 to the open position the cylinders 94 are retracted to lift the first support 80 up along the molding axis 88 away from the second support 82.

For the sake of completeness, in this example the second support 82 has a further mounting plate assembly 84 which supports further second tool halves 24 which are out of alignment with the first tool halves 20. This is to facilitate tool changeover, which is not material to the present disclosure and therefore will not be described in detail.

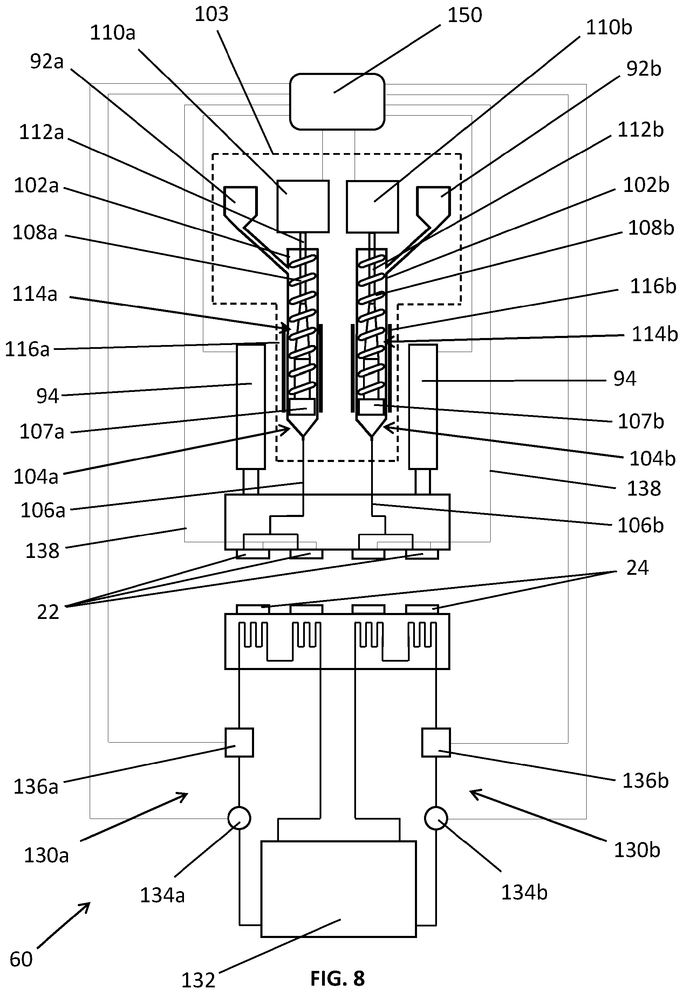

FIG. 8 shows a schematic of the injection molding machine 60, in which are shown several features of the machine 60 which are not visible in FIGS. 5 to 7. Referring now to FIGS. 1A to 8, hopper 92a is connected to feed a first barrel 102a with polymer/plastic pellets container therein, and hopper 92b is connected similarly to feed a second barrel 102b. The barrels 102a, 102b form part of an injection unit 103. Each barrel 102a, 102b terminates in a nozzle portion 104a, 104b, which forms the outlet for the barrel 102a, 102b. The nozzle portion 104a of the first barrel 102a is connected to the injection nozzles 26 of the first tool halves 22 which partially form the first subset of tool cavities 54a by ducting 106a. Similarly, the nozzle portion 104b of the second barrel 102b is connected to the injection nozzles 26 of the first tool halves 22 which partially form the second subset of tool cavities 54b by ducting 106b.

Each barrel 104a, 104b contains a respective plunger 107a, 107b which has a screw 108a, 108b. The screws 108a, 108b are connected to respective drive assemblies 110a, 110b that are arranged to rotate their respective screws 108a, 108b and to move them linearly, as described later. Each screw 108a, 108b has a core 112a, 112b with a tapered portion 114a, 114b which gradually increases in diameter towards the nozzle portion 104a, 104b of the respective barrel 102a, 102b. The barrels 104a, 104b also have respective heaters 116a, 116b circumferentially surrounding them.

The machine 60 also has a first coolant path 130a which is connected to the coolant passages 45, 50 of the second tool halves 24 which partially form the first subset of tool cavities 54a, and a second coolant path 130b which is connected to the coolant passages 45, 50 of the second tool halves 24 which partially form the second subset of tool cavities 54b. Further coolant paths are provided in communication with the first tool halves 22, but these are not material to the present disclosure therefore will not be described in detail.

The coolant paths 130a, 130b are connected to a common reservoir 132 filled with coolant fluid (in this case water). Each coolant path 130a, 130b has a pump 134a, 134b for circulating coolant fluid around it, and a temperature adjustment device in the form of a combined heater/cooler 136a, 136b for heating or cooling the coolant fluid in that coolant path 130a, 130b to the desired temperature.

The function of the machine 60 is controlled by a controller 150. The controller 150 is connected to the hydraulic cylinders 94, drive assemblies 110a, 110b, heaters 116a, 116b, pumps 134a, 134b and heater/coolers 136a, 136b, and controls the operation of these components. The controller 150 is also connected to the thermocouples 28 of the first tool halves 22, by wires 138, receiving signals therefrom which are indicative of the temperatures of the first tool halves 22.

A method of operation of the machine 60 will now be described, with reference to FIGS. 1 to 8 in combination. As noted previously, contact lens mold halves 2, 4 are produced by injecting molten polymer into the tool cavities 54a, 54b and letting the molten polymer/plastic solidify. In this example, polymer/plastic pellets in hopper 92a are melted in the first barrel 102a and injected from the nozzle portion 104a thereof into the first subset 54a of tool cavities so as to form male mold halves 2, and polymer/plastic pellets in hopper 92b are melted in the second barrel 102b and injected from the nozzle portion 104b thereof into the second subset 54b of tool cavities so as to form female mold halves 4.

To melt the polymer/plastic, the controller 150 commands the drive assemblies 110a, 110b to rotate their respective plungers 107a, 107b so as to rotate screws 108a, 108b, and to apply an axial force to the associated plunger and screw which urges them towards the nozzle portions 104a, 104b of their respective barrels 102a, 102b. As each screw 108a, 108b rotates in its barrel 102a, 102b, polymer/plastic granules from the associated hopper 92a, 92b are forced towards the nozzle portion 104a, 104b of the barrel. As the polymer/plastic pellets pass along the tapered portion 110a, 110b, they are forced over one another and are compressed together, and the pellets undergo heating from friction and from mechanical deformation.

As the polymer/plastic in each barrel 102a, 102b is pushed towards the respective nozzle portion 104a, 104b, it exerts a reaction force on the screw 108a, 108b of that barrel 102a, 102b, creating a pressure which urges the screw 108a, 108b backwards away from the nozzle portion 104a 104b. The axial force applied to each plunger 107a, 107b by its drive assembly 110a, 110b, described above, causes the screw 108a, 108b to exert a forward pressure to oppose this, known as the back pressure. As an illustration, a typical back pressure may be in the region of 100 bar. The greater the axial force provided by the drive assembly 110a, 110b, the greater the back pressure (i.e. the more resistant the screw 108a, 108b is to being pushed rearwards by the polymer/plastic) and thus the more intense the heating experienced by the polymer/plastic.

In some cases the heating effects is sufficient raise the polymer/plastic to the required temperature. In other cases, additional heat may be required in order to ensure that the polymer/plastic reaches the required temperature. Such heat can be provided by the heaters 116a, 116b.

The pellets are fully molten by the time they reach the nozzle portions 104a, 104b of their respective barrels 102a, 102b. As the screws 108a, 108b continue to rotate, molten polymer/plastic collects at the nozzle portions 104a, 104b of their respective barrels 102a, 102b. The build-up of polymer/plastic forces the screws 108a, 108b backwards, against the axial force provided by their respective drive assemblies 110a, 110b. While molten polymer/plastic collects in the nozzle portions 104a, 104b, the heaters 116a, 116b can provide additional heat to keep it at the required temperature, if needed.

Also, while polymer/plastic collects in the nozzle portions 104a, 104b, the controller 150 activates the hydraulic cylinders 94 to move the first and second supports 80, 82 from the open position to the closed position so as to form the first and second subsets of tool cavities 54a, 54b.

Once sufficient molten polymer/plastic has collected in the nozzle portions 104a, 104b, the machine 60 is ready to produce mold halves 2, 4. The controller 150 signals the drive assemblies 110a, 110b to stop rotating their respective plungers 107a, 107b and screws 108a, 108b, and to drive the plungers 107a, 107b axially forwards towards the nozzle portions 104a, 104b. The plungers 107a, 107b force the molten polymer/plastic out of their respective barrels 102a, 102b, through the ducting 106a, 106b and into the tool cavities 54a, 54b through the injection nozzles 26 of the first tool halves 22. Molten polymer/plastic from the first barrel 102a fills the first subset 54a of tool cavities and molten polymer/plastic from the second barrel 102b fills the second subset 54b of tool cavities. The drive assemblies 110a, 110b continue to urge the plungers 107a, 107b forwards once the tool cavities 54a, 54b are full of polymer/plastic, thereby maintaining a 'hold pressure' on the polymer/plastic in the cavities 54a, 54b as it solidifies. This can improve the crystal structure of the mold halves 2, 4, and/or can reduce warpage thereof.

The tool cavities 54a, 54b filling with molten polymer/plastic has the effect of raising the temperature of the tool haves 22, 24, which slows the cooling (and thus solidification) of the polymer/plastic inside the cavities 54a, 54b. The controller 150 monitors the temperatures of the tool halves via the thermocouples 28, and combats this effect by circulating water from the common reservoir 132, cooled by the heater/coolers 136a, 136b, through the coolant paths 130a, 130b.

Once the polymer/plastic in the tool cavities 54a, 54b has solidified, the controller 150 activates the hydraulic cylinders 94 to move the first and second supports 80, 82 from the closed position to the open position so as to part the first and second tool halves 22, 24 from one another and open the tool cavities 54a, 54b. An ejection mechanism (not shown) then operates to eject the mold halves 2, 4, which are collected by the takeoff robot 74. The machine 60 is then ready to repeat the above process so as to form more mold halves 2, 4.

The apparatus 60 allows molten polymer/plastic to be injected into the tool cavities 54a, 54b with one or more of a wide range of process parameters differing between injection molding in the first subset 54a and injection molding in the second subset 54b (i.e. between injection molding male mold halves 2 and injection molding female mold halves 4, in this specific case). Firstly, the first and second subsets of tool cavities 54a, 54b being fed from different barrels 102a, 102b means that different polymers/plastics can be injected into each subset 54a, 54b. In the present example both mold halves 2, 4 are made of polypropylene, but different polypropylenes are used. In other examples, however, one or both of the mold halves may be made of a different material such as ethylene vinyl alcohol ("EVOH"). The first hopper 92a is filled with a first polypropylene formulation, which is fed into the first barrel 102a and injected into the first subset of tool cavities 54a to form the first mold halves 2. The second hopper 92b is filled with a second formulation of polypropylene, which is fed into the second barrel 102b and injected into the second subset of tool cavities 54b so as to form the second mold halves 4. The polypropylene used to produce the second mold halves 4 is more 'wettable' to the formulation used to produce contact lenses, meaning that contact lens formulation can be contained in the second mold half 4 with reduced risk of spillage. The polypropylene used for the female mold halves 4 also adheres better to the contact lenses produced, meaning that when the mold halves 2, 4 are separated after the contact lens is formed, the contact lens is more likely to remain adhered to the second mold half 4. This, in turn, can simplify downstream recovery of the contact lens.

The drive assemblies 110a, 110b of the plungers 107a, 107b of the first and second barrels 102a, 102b are independently operable by the controller 150. The torque(s) and linear force(s) applied to the plungers 107a, 107b therefore need not necessarily be the same in magnitude or timing. Thus, the screws 108a, 108b of the plungers 107a, 107b can apply different back pressures. In the present example the back pressures exerted on the screws 108a, 108b by the drive assemblies 110a, 110b differ slightly from each other in magnitude. The amount of heating experienced by the polymer/plastic in each barrel 102a, 102b is therefore slightly different, which allows the different types of polypropylene in their respective barrels to be heated at rates which are tailored to their respective compositions. For the same reason, in the present example a different level of heating is also provided to the polymer/plastic in the two different barrels 102a, 102b due to the controller 150 operating the heaters 116a, 116b to provide different levels of top-up heating.

The two barrels 102a, 102b having independently movable plungers 107a, 107b means that the polymer/plastic can be injected therefrom according to different hold pressure profiles (i.e. different patterns of change in pressure over time) if commanded by the controller 150. In the present example each hold pressure profile rises relatively slowly (as molten polymer/plastic from the barrels 102a, 102b enters the tool cavities 54a, 54b), then rises sharply (once the tool cavities 54a, 54b are full) and plateaus at a peak hold pressure, then steadily decreases to zero as the injected polymer/plastic solidifies. However, the hold pressure profiles of the two barrels 102a, 102b differ in that one plateaus at a higher peak hold pressure, and decreases more gradually than the other. In this example the hold pressure profiles begin at the same time (i.e. injection into the first subset of tool cavities 54a and the second subset of tool cavities 54b takes place at the same time). The time during which pressure is applied (known as the hold time) is therefore longer for the hold pressure profile with the higher peak hold pressure.

The purpose of the differing hold pressure profiles between the two barrels 102a, 102b is to tailor them to the geometry of the specific subset of tool cavities 54a, 54b injected by that barrel 102a, 102b, and/or towards the particular material being injected. For example, one of the formulations of polypropylene may exhibit a better crystal structure if held at a higher pressure. As another example, the different shapes of the male and female contact lens mold halves 2, 4 may mean that one subset of tool cavities 54a, 54b has a larger volume than the other. The tool cavities of that subset 54a, 54b would accommodate more polypropylene, which may cool more slowly and may therefore require a longer hold time (the hold time for a set of tool cavities typically concludes at the same time as the polymer/plastic inside those cavities has fully solidified, tapering down in pressure as the polymer/plastic progressively solidifies).

In this example the controller 150 is not only configurable to vary some of the process parameters between the two subsets of tool cavities 54a, 54b by controlling components of the injection unit 103 as described above, but is also able to vary other process parameters by controlling components of the coolant paths 130a, 130b. The controller 150 can adjust the speeds at which the pumps 134a, 134b circulate water through their respective coolant paths 130a, 130b independently of one another, and can control the heater/coolers 136a, 136b to adjust the rate of heating/cooling or the temperature to which the water is maintained. For example, the controller 150 may operate the first pump 134a at a faster rate than the second pump 134a, and may operate the first heater/cooler 136a to cool water passing through the first coolant path 130a to a lower temperature than that to which the second heater/cooler 136a cools water passing through the second coolant path 130b. In doing so, the controller can hold the first subset of tool cavities 54a at a lower temperature than the second subset 54b (for instance before, during and/or after injection of polymer/plastic). This may be beneficial e.g. if polymer/plastic is injected into the first subset 54a at a higher temperature (at which point more cooling may be needed to avoid the associated tool halves 22, 24 from overheating).

While the present disclosure has been described and illustrated with reference to particular examples, it will be appreciated by those of ordinary skill in the art that the disclosure lends itself to many different variations not specifically illustrated herein. By way of example only, other machines may be configurable to alter fewer process parameters, for instance only rate of cooling of tool cavities or only peak hold pressure. As another example, whilst in the above example the controller can adjust process parameters as needed, other machines may have fixed process parameters at least one of which differs between the first and second subsets of tool cavities.

For the avoidance of doubt, the names 'first tool half', 'second tool half' etc. should not be construed as having any limitations beyond those recited in the appended claims. There is no intended implication in terms of structure of said tool halves or order of use. For instance, the second tool halves and third tool halves may be identical to one another in some examples, and/or the first use of the apparatus may utilize the third tool halves before the second tool halves.

In the foregoing description, where integers or elements are mentioned which have known, obvious or foreseeable equivalents, then such equivalents are herein incorporated as if individually set forth. Reference should be made to the claims for determining the true scope of the present disclosure, which should be construed so as to encompass any such equivalents. It will also be appreciated by the reader that integers or features of the disclosure that are described as preferable, advantageous, convenient, or the like, are optional and do not limit the scope of the independent claims. Moreover, it is to be understood that such optional integers or features, while of possible benefit in some embodiments of the disclosure, may not be desirable, and can therefore be absent, in other embodiments.

## Claims

1. A contact lens mold half injection molding machine (60), the machine (60) comprising:
a plurality of tool cavities (54a, 54b), each tool cavity (54a, 54b) defining a space into which molten polymer can be injected so as to form a contact lens mold half (2, 4);
an injection unit (103) in communication with the tool cavities (54a, 54b), the injection unit (103) being configured to melt a polymer and inject it into the tool cavities (54a, 54b), wherein the injection unit (103) comprises a first barrel (102a) from which molten polymer can be injected into the first subset of tool cavities (54a), and a second barrel (102b) from which molten polymer can be injected into the second subset of tool cavities (54b); and
a controller (150),
wherein:
the plurality of tool cavities (54a, 54b) comprises a first subset of tool cavities (54a) and a second subset of tool cavities (54b); and
the machine (60) is configurable to injection mold contact lens mold halves (2, 4), by injecting molten polymer into the tool cavities (54a, 54b) and allowing the polymer to solidify, with one or more process parameters differing in value between the first subset of tool cavities (54a) and the second subset of tool cavities (54b).

2. The machine (60) according to claim 1 wherein the first barrel (102a) has a first plunger (107a) and the second barrel (102b) has a second plunger (107b), the first plunger (107a) and the second plunger (107b) being operable independently by the controller (150) to move longitudinally and thereby eject molten polymer out of an outlet (104a, 104b) of the associated barrel (102a, 102b).

3. The machine (60) according to claim 2 wherein the controller (150) is configurable to operate the first plunger (107a) so as to produce a first hold pressure profile in the first tool cavities (54a), and to operate the second plunger (107b) so as to produce a second hold pressure profile in the second tool cavities (54b), the first and second hold pressure profiles being different to one another.

4. The machine (60) according to claim 3 wherein a peak hold pressure of the first hold pressure profile is different to a peak hold pressure of the second hold pressure profile.

5. The machine (60) according to claim 3 or 4 wherein a hold time of the first hold pressure profile is different to a hold time of the second hold pressure profile.

6. The machine (60) according to any one of claims 2 to 5 wherein:
the first plunger (107a) has a first screw (108a) and the second plunger (107b) has a second screw (108b), each plunger (107a, 107b) being operable by the controller (150) to rotate and thereby cause the associated screw (108a, 108b) to urge polymer towards the outlet (104a, 104b) of the associated barrel (102a, 102b); and
the controller (150) is configurable to operate the first and second plungers (107a, 107b) differently to one another such that the first screw (108a) urges said polymer at a different back pressure to the second screw (108b).

7. The machine (60) according to any preceding claim wherein the first barrel (102a) has a first heater (116a) and the second barrel (102b) has a second heater (116b), the first heater (116a) and the second heater (116b) being arranged to heat polymer contained in the associated barrel (102a, 102b), the first heater (116a) and the second heater (116b) being controlled by the controller (150) and the controller (150) being configurable to operate the first heater (116a) and the second heater (116b) at different temperatures to one another.

8. The machine (60) according to any preceding claim wherein the first subset of tool cavities (54a) is associated with a first coolant path (130a) and the second subset of tool cavities (54b) is associated with a second coolant path (130b) which is separate to the first.

9. The machine (60) according to any preceding claim wherein the first subset of tool cavities (54a) are shaped to form male contact lens mold halves (2), and the second subset of tool cavities (54b) are shaped to form female contact lens mold halves (4).

10. A method of injection molding contact lens mold halves (2, 4) using the contact lens mold half injection molding machine (60) of claim 1, the method comprising:
providing a first subset of tool cavities (54a) and a second subset of tool cavities (54b);
and
under control of a controller (150), injection molding contact lens mold halves (2, 4) by injecting molten polymer into the first subset of tool cavities (54a) and the second subset of tool cavities (54b) and allowing the molten polymer to solidify,
wherein during injection molding of the contact lens mold halves (2, 4), at least one process parameter differs in value between the first subset of tool cavities (54a) and the second subset of tool cavities (54b).

11. The method according to claim 10 wherein the polymer injected into the first subset of tool cavities (54a) differs in material composition to the polymer injected into the second subset of tool cavities (54b).

12. The method according to claim 10 or 11 wherein a first hold pressure profile applied to polymer in the first subset of tool cavities (54a) is different to a second hold pressure profile applied to polymer in the second subset of tool cavities (54b).

13. The method according to claim 12 wherein a peak hold pressure of the first hold pressure profile is different to a peak hold pressure of the second hold pressure profile, and/or wherein a hold time of the first hold pressure profile is different to a hold time of the second hold pressure profile.

14. The method according to any one of claims 10 to 13 wherein the polymer is injected into the first subset of tool cavities (54a) at a different temperature to the polymer injected into the second subset of tool cavities (54b), and/or wherein the first subset of tool cavities (54a) are held at a different temperature to the second subset of tool cavities (54b) during injection molding of the contact lens mold halves (2, 4).

15. A method of manufacturing a contact lens, the method comprising:
injection molding a male contact lens mold half (2) and injection molding a female contact lens mold half (4), at least one of said mold halves (2, 4) being a contact lens mold half injection molded using the injection molding machine (60) of claim 1;
engaging the male contact lens mold half (2) and the female contact lens mold half (4)with one another, with a quantity of contact lens formulation located in a cavity defined therebetween;
curing the contact lens formulation to form said contact lens; and
separating the male contact lens mold half (2) and the female contact lens mold half (4) and removing the contact lens.

## Patentansprüche

1. Spritzgießmaschine (60) für eine Kontaktlinsenformhälfte, wobei die Maschine (60) umfasst:
eine Vielzahl von Werkzeugkavitäten (54a, 54b), wobei jede Werkzeugkavität (54a, 54b) einen Raum definiert, in den geschmolzenes Polymer eingespritzt werden kann, um eine Kontaktlinsenformhälfte (2, 4) zu bilden;
eine Spritzeinheit (103), die mit den Werkzeugkavitäten (54a, 54b) in Verbindung steht, wobei die Spritzeinheit (103) so konfiguriert ist, dass sie ein Polymer schmilzt und es in die Werkzeugkavitäten (54a, 54b) einzuschleusen, wobei die Einspritzeinheit (103) einen ersten Zylinder (102a), aus dem geschmolzenes Polymer in die erste Untergruppe von Werkzeugkavitäten (54a) eingespritzt werden kann, und einen zweiten Zylinder (102b) umfasst, aus dem geschmolzenes Polymer in die zweite Untergruppe von Werkzeugkavitäten (54b) eingespritzt werden kann; und
eine Steuerung (150),
wobei:
die Vielzahl von Werkzeugkavitäten (54a, 54b) eine erste Untergruppe von Werkzeugkavitäten (54a) und eine zweite Untergruppe von Werkzeugkavitäten (54b) umfasst; und
die Maschine (60) so konfigurierbar ist, dass sie Kontaktlinsen-Formhälften (2, 4) spritzgießt, indem geschmolzenes Polymer in die Werkzeugkavitäten (54a, 54b) eingespritzt wird und das Polymer erstarren gelassen wird, wobei sich ein oder mehrere Prozessparameter in ihrem Wert zwischen der ersten Untergruppe von Werkzeugkavitäten (54a) und der zweiten Untergruppe von Werkzeugkavitäten (54b) unterscheiden.

2. Maschine (60) nach Anspruch 1, wobei der erste Zylinder (102a) einen ersten Kolben (107a) und der zweite Zylinder (102b) einen zweiten Kolben (107b) aufweist, wobei der erste Kolben (107a) und der zweite Kolben (107b) von der Steuerung (150) unabhängig voneinander betätigbar sind, um sich in Längsrichtung zu bewegen und dadurch geschmolzenes Polymer aus einem Auslass (104a, 104b) des zugehörigen Zylinders (102a, 102b) auszustoßen.

3. Maschine (60) nach Anspruch 2, wobei die Steuerung (150) so konfigurierbar ist, dass sie den ersten Kolben (107a) so betätigt, dass ein erstes Halte-Druckprofil in den ersten Werkzeugkavitäten (54a) erzeugt wird, und den zweiten Kolben (107b) so betätigt, dass ein zweites Halte-Druckprofil in den zweiten Werkzeugkavitäten (54b), wobei sich das erste und das zweite Halte-Druckprofil voneinander unterscheiden.

4. Maschine (60) nach Anspruch 3, wobei sich ein Spitzen-Haltedruck des ersten Haltedruckprofils von einem Spitzen-Haltedruck des zweiten Haltedruckprofils unterscheidet.

5. Maschine (60) nach Anspruch 3 oder 4, wobei sich eine Haltezeit des ersten Halte-Druckprofils von einer Haltezeit des zweiten Halte-Druckprofils unterscheidet.

6. Maschine (60) nach einem der Ansprüche 2 bis 5, wobei:
der erste Kolben (107a) eine erste Schnecke (108a) und der zweite Kolben (107b) eine zweite Schnecke (108b) aufweist, wobei jeder Kolben (107a, 107b) durch die Steuerung (150) so betätigbar ist, dass er sich dreht und dadurch bewirkt, dass die zugehörige Schnecke (108a, 108b) das Polymer in Richtung des Auslasses (104a, 104b) des zugehörigen Zylinders (102a, 102b) drückt; und
die Steuerung (150) so konfigurierbar ist, dass sie den ersten und den zweiten Kolben (107a, 107b) unterschiedlich zueinander betätigt, so dass die erste Schnecke (108a) das Polymer mit einem anderen Gegendruck als die zweite Schnecke (108b) drückt.

7. Maschine (60) nach einem der vorstehenden Ansprüche, wobei der erste Zylinder (102a) eine erste Heizung (116a) und der zweite Zylinder (102b) eine zweite Heizung (116b) aufweist, wobei die erste Heizung (116a) und die zweite Heizung (116b) so angeordnet sind, dass sie das in dem zugehörigen Zylinder (102a, 102b) zu erwärmen, wobei die erste Heizvorrichtung (116a) und die zweite Heizvorrichtung (116b) von der Steuerung (150) gesteuert werden und die Steuerung (150) so konfigurierbar ist, dass sie die erste Heizvorrichtung (116a) und die zweite Heizvorrichtung (116b) bei voneinander unterschiedlichen Temperaturen betreibt.

8. Maschine (60) nach einem der vorstehenden Ansprüche, wobei die erste Untergruppe von Werkzeugkavitäten (54a) einem ersten Kühlmittelweg (130a) zugeordnet ist und die zweite Untergruppe von Werkzeugkavitäten (54b) einem zweiten Kühlmittelweg (130b) zugeordnet ist, der von dem ersten getrennt ist.

9. Maschine (60) nach einem der vorstehenden Ansprüche, wobei die erste Untergruppe von Werkzeugkavitäten (54a) so geformt ist, dass sie männliche Kontaktlinsenformhälften (2) bildet, und die zweite Untergruppe von Werkzeugkavitäten (54b) so geformt ist, dass sie weibliche Kontaktlinsenformhälften (4) bildet.

10. Verfahren zum Spritzgießen von Kontaktlinsenformhälften (2, 4) unter Verwendung der Spritzgießmaschine (60) für Kontaktlinsenformhälften nach Anspruch 1, wobei das Verfahren umfasst:
Bereitstellen einer ersten Untergruppe von Werkzeugkavitäten (54a) und einer zweiten Untergruppe von Werkzeugkavitäten (54b);
und
unter der Steuerung einer Steuerung (150) das Spritzgießen von Kontaktlinsenformhälften (2, 4) durch Einspritzen von geschmolzenem Polymer in die erste Untergruppe von Werkzeugkavitäten (54a) und die zweite Untergruppe von Werkzeugkavitäten (54b) und das Erstarrenlassen des geschmolzenen Polymers,
wobei sich während des Spritzgießens der Kontaktlinsenformhälften (2, 4) mindestens ein Prozessparameter in seinem Wert zwischen der ersten Untergruppe von Werkzeugkavitäten (54a) und der zweiten Untergruppe von Werkzeugkavitäten (54b) unterscheidet.

11. Verfahren nach Anspruch 10, wobei sich das in die erste Untergruppe von Werkzeugkavitäten (54a) eingespritzte Polymer in seiner Materialzusammensetzung von dem in die zweite Untergruppe von Werkzeugkavitäten (54b) eingespritzten Polymer unterscheidet.

12. Verfahren nach Anspruch 10 oder 11, wobei sich ein erstes Halte-Druckprofil, das auf das Polymer in der ersten Untergruppe von Werkzeugkavitäten (54a) angewendet wird, von einem zweiten Halte-Druckprofil unterscheidet, das auf das Polymer in der zweiten Untergruppe von Werkzeugkavitäten (54b) angewendet wird.

13. Verfahren nach Anspruch 12, wobei sich ein Spitzen-Haltedruck des ersten Haltedruckprofils von einem Spitzen-Haltedruck des zweiten Haltedruckprofils unterscheidet und/oder wobei sich eine Haltezeit des ersten Haltedruckprofils von einer Haltezeit des zweiten Haltedruckprofils unterscheidet.

14. Verfahren nach einem der Ansprüche 10 bis 13, wobei das Polymer in die erste Untergruppe von Formhohlräumen (54a) bei einer anderen Temperatur eingespritzt wird als das in die zweite Untergruppe von Formhohlräumen (54b) eingespritzte Polymer, und/oder wobei die erste Untergruppe von Werkzeugkavitäten (54a) während des Spritzgießens der Kontaktlinsen-Formhälften (2, 4) auf einer anderen Temperatur gehalten wird als die zweite Untergruppe von Werkzeugkavitäten (54b).

15. Verfahren zur Herstellung einer Kontaktlinse, wobei das Verfahren umfasst:
Spritzgießen einer männlichen Kontaktlinsenformhälfte (2) und Spritzgießen einer weiblichen Kontaktlinsenformhälfte (4), wobei mindestens eine der Formhälften (2, 4) eine Kontaktlinsenformhälfte ist, die unter Verwendung der Spritzgießmaschine (60) nach Anspruch 1 spritzgegossen wurde;
das Zusammenfügen der männlichen Kontaktlinsenformhälfte (2) und der weiblichen Kontaktlinsenformhälfte (4), wobei sich eine Menge der Kontaktlinsenformulierung in einem zwischen ihnen definierten Hohlraum befindet;
Aushärten der Kontaktlinsenformulierung, um die Kontaktlinse zu bilden; und
Trennen der männlichen Kontaktlinsenformhälfte (2) und der weiblichen Kontaktlinsenformhälfte (4) und Entnehmen der Kontaktlinse.

## Revendications

1. Machine (60) de moulage par injection de demi-moule de lentille de contact, la machine (60) comprenant :
une pluralité de cavités d'outil (54a, 54b), chaque cavité d'outil (54a, 54b) définissant un espace dans lequel un polymère fondu peut être injecté de manière à former un demi-moule (2, 4) de lentille de contact ;
une unité d'injection (103) en communication avec les cavités d'outil (54a, 54b), l'unité d'injection (103) étant configurée pour faire fondre un polymère et l'injecter dans les cavités d'outil (54a, 54b), l'unité d'injection (103) comprenant un premier cylindre (102a) à partir duquel le polymère fondu peut être injecté dans le premier sous-ensemble de cavités d'outil (54a), et un second cylindre (102b) à partir duquel le polymère fondu peut être injecté dans le second sous-ensemble de cavités d'outil (54b) ; et
un dispositif de commande (150),
dans laquelle :
la pluralité de cavités d'outil (54a, 54b) comprend un premier sous-ensemble de cavités d'outil (54a) et un second sous-ensemble de cavités d'outil (54b) ; et
la machine (60) est configurable pour mouler par injection des demi-moules (2, 4) de lentilles de contact, en injectant du polymère fondu dans les cavités d'outil (54a, 54b) et en laissant le polymère se solidifier, avec un ou plusieurs paramètres de fonctionnement dont la valeur diffère entre le premier sous-ensemble de cavités d'outil (54a) et le second sous-ensemble de cavités d'outil (54b).

2. Machine (60) selon la revendication 1, dans laquelle le premier cylindre (102a) présente un premier piston (107a) et le second cylindre (102b) présente un second piston (107b), le premier piston (107a) et le second piston (107b) pouvant être actionnés indépendamment par le dispositif de commande (150) pour se déplacer longitudinalement et ainsi éjecter le polymère fondu hors d'une sortie (104a, 104b) du cylindre associé (102a, 102b).

3. Machine (60) selon la revendication 2, dans laquelle le dispositif de commande (150) est configurable pour actionner le premier piston (107a) de manière à produire un premier profil de pression de maintien dans les premières cavités d'outil (54a), et pour actionner le second piston (107b) de manière à produire un second profil de pression de maintien dans les secondes cavités d'outil (54b), les premier et second profils de pression de maintien étant différents l'un de l'autre.

4. Machine (60) selon la revendication 3, dans laquelle un pic de pression de maintien du premier profil de pression de maintien est différent d'un pic de pression de maintien du second profil de pression de maintien.

5. Machine (60) selon la revendication 3 ou 4, dans laquelle un temps de maintien du premier profil de pression de maintien est différent d'un temps de maintien du second profil de pression de maintien.

6. Machine (60) selon l'une quelconque des revendications 2 à 5, dans laquelle :
le premier piston (107a) présente une première vis (108a) et le second piston (107b) présente une seconde vis (108b), chaque piston (107a, 107b) pouvant être actionné par le dispositif de commande (150) pour tourner et ainsi amener la vis associée (108a, 108b) à pousser le polymère vers la sortie (104a, 104b) du cylindre associé (102a, 102b) ; et
le dispositif de commande (150) est configurable pour actionner les premier et second pistons (107a, 107b) de manière différente l'un de l'autre, de sorte que la première vis (108a) pousse ledit polymère avec une contre-pression différente de celle de la seconde vis (108b).

7. Machine (60) selon une quelconque revendication précédente, dans laquelle le premier cylindre (102a) présente un premier dispositif de chauffage (116a) et le second cylindre (102b) présente un second dispositif de chauffage (116b), le premier dispositif de chauffage (116a) et le second dispositif de chauffage (116b) étant agencés pour chauffer le polymère contenu dans le cylindre associé (102a, 102b), le premier dispositif de chauffage (116a) et le second dispositif de chauffage (116b) étant commandés par le dispositif de commande (150) et le dispositif de commande (150) étant configurable pour faire fonctionner le premier dispositif de chauffage (116a) et le second dispositif de chauffage (116b) à des températures différentes l'une de l'autre.

8. Machine (60) selon une quelconque revendication précédente, dans laquelle le premier sous-ensemble de cavités d'outil (54a) est associé à un premier circuit de refroidissement (130a) et le second sous-ensemble de cavités d'outil (54b) est associé à un second circuit de refroidissement (130b) qui est séparé du premier.

9. Machine (60) selon une quelconque revendication précédente, dans laquelle le premier sous-ensemble de cavités d'outils (54a) est formé de manière à former des demi-moules (2) mâles de lentille de contact, et le second sous-ensemble de cavités d'outil (54b) est formé de manière à former des demi-moules (4) femelles de lentille de contact.

10. Procédé de moulage par injection de demi-moules (2, 4) de lentille de contact à l'aide de la machine (60) de moulage par injection de demi-moules de lentille de contact selon la revendication 1, le procédé comprenant :
la fourniture d'un premier sous-ensemble de cavités d'outil (54a) et d'un second sous-ensemble de cavités d'outil (54b) ; et
sous la commande d'un dispositif de commande (150), le moulage par injection de demi-moules (2, 4) de lentille de contact en injectant du polymère fondu dans le premier sous-ensemble de cavités d'outil (54a) et le second sous-ensemble de cavités de moule (54b) et en laissant le polymère fondu se solidifier,
dans lequel, pendant le moulage par injection des demi-moules (2, 4) de lentille de contact, une valeur d'au moins un paramètre de fonctionnement est différente entre le premier sous-ensemble de cavités d'outil (54a) et le second sous-ensemble de cavités d'outil (54b).

11. Procédé selon la revendication 10, dans lequel une composition de matériau du polymère injecté dans le premier sous-ensemble de cavités d'outil (54a) est différente de celle du polymère injecté dans le second sous-ensemble de cavités d'outil (54b).

12. Procédé selon la revendication 10 ou **11,** dans lequel un premier profil de pression de maintien appliqué au polymère dans le premier sous-ensemble de cavités d'outil (54a) est différent d'un second profil de pression de maintien appliqué au polymère dans le second sous-ensemble de cavités d'outil (54b).

13. Procédé selon la revendication 12, dans lequel un pic de pression de maintien du premier profil de pression de maintien est différent d'un pic de pression de maintien du second profil de pression de maintien, et/ou dans lequel un temps de maintien du premier profil de pression de maintien est différent d'un temps de maintien du second profil de pression de maintien.

14. Procédé selon l'une quelconque des revendications 10 à 13, dans lequel le polymère est injecté dans le premier sous-ensemble de cavités d'outil (54a) à une température différente de celle du polymère injecté dans le second sous-ensemble de cavités d'outil (54b), et/ou dans lequel le premier sous-ensemble de cavités d'outil (54a) est maintenu à une température différente de celle du second sous-ensemble de cavités d'outil (54b) pendant le moulage par injection des demi-moules (2, 4) de lentille de contact.

15. Procédé de fabrication d'une lentille de contact, le procédé comprenant :
le moulage par injection d'un demi-moule (2) mâle de lentille de contact et le moulage par injection d'un demi-moule (4) femelle de lentille de contact, au moins l'un desdits demi-moules (2, 4) étant un demi-moule de lentille de contact moulé par injection à l'aide de la machine (60) de moulage par injection selon la revendication 1 ;
la mise en prise du demi-moule (2) mâle de lentille de contact et du demi-moule (4) femelle de lentille de contact l'un avec l'autre, une quantité de formulation de lentille de contact étant placée dans une cavité définie entre eux ;
le durcissement de la formulation de lentille de contact pour former ladite lentille de contact ; et
la séparation du demi-moule (2) mâle de lentille de contact et du demi-moule (4) femelle de lentille de contact et le retrait de la lentille de contact.
